# EUROPEAN PATENT APPLICATION

(11) **EP 1 593 564 A1**
(43) Date of publication of application: **09.11.2005**
(21) Application number: 05103556.6
(22) Date of filing: 29.04.2005
(51) Int. Cl.: B60R 25/10

(54) **Communication method and system for vehicles**

(30) Priority: 05.05.2004 IT MI20040906
(71) Applicant: Meroni, Giuseppe, 22046 MERONE (Como) (IT)
(72) Inventor: Meroni, Giuseppe, 22046 MERONE (Como) (IT)
(74) Representative: Coppo, Alessandro

(57) **Abstract**

The invention relates to a method and system for communicating between vehicles. A first vehicle detects an identification code of a second vehicle and performs an on-board comparison with stored identification codes. If the result is positive, a signal is transmitted, preferably to a control centre. This helps in tracking stolen vehicles, in particular if signal transmission from the stolen vehicle (the second vehicle) to a control centre is jammed. The system comprises units provided a plurality of vehicles capable of communicating with each other, preferably via blue tooth.

## Description

The present invention relates to a communication method and system for vehicles.

Currently, vehicles can be provided with anti-theft systems capable of detecting the position by means of the "Global Positioning System" (GPS).

On the basis of this positioning system, it is in fact possible to detect, by means of one or more satellites, the position of a stolen vehicle, thereby allowing the location thereof.

However, this is dependent on the possibility of the vehicle being capable of signalling the position thereof to a control centre.

One disadvantage of these anti-theft systems is that by means of a device to isolate the signal it is possible to prevent a stolen vehicle from signalling or transmitting the position thereof to a detection system of a control centre.

This is possible simply by positioning the isolation device, which for example can be a type of device commonly known with the term "jammer", in the vicinity of or inside the stolen vehicle.

The object of the present invention is to produce a communication method and system for vehicles which is capable of detecting the presence of a specific vehicle.

Another object is to produce a communication method and system for vehicles which is capable of detecting and signalling the presence or the position of a specific vehicle.

These objects according to the present invention are attained by producing a communication method and system for vehicles as set forth in claim 1.

Further characteristics of the invention are set forth in the subsequent claims.

The characteristics and advantages of a communication method and system for vehicles according to the present invention shall be more apparent from the following description, provided by way of a nonlimiting example of the invention.

According to the present invention, a communication method is provided for vehicles, each of which is provided with an identification code which allows the identification thereof.

The communication method comprises the step b) of detecting from one vehicle an identification code of another vehicle, which is in the vicinity, and of comparing the identification code with at least one specific stored identification code.

The communication method preferably comprises the following step: c) if the comparison of step b) is positive, transmitting a signal.

Preferably, said step c) consists of sending an alarm signal to a control centre.

Preferably, said step c) consists of sending an activation signal to a vehicle having an identification code corresponding to said at least one specific stored identification code.

Preferably, the step c) comprises the step d) of signalling the position of the vehicle having an identification code corresponding to said at least one specific stored identification code.

Preferably, the communication method also comprises the step a) of receiving the at least one specific identification code and storing it.

Preferably, said step a) consists of receiving the at least one specific identification code, for example, from a control centre.

The at least one specific identification code can, for example, be at least one identification code of a stolen vehicle or, in any case, of a vehicle whose position requires to be located.

In this way, it is possible, in the event of a theft, to send or communicate to a control centre at least one specific identification code corresponding to a vehicle that has been stolen or requires to be located.

A control centre can then in turn send, to a plurality of vehicles, said at least one specific identification code, which will be received and stored by each vehicle.

Alternatively, the stolen vehicle can be capable of automatically acknowledging that it has been stolen and consequently of storing this information, that is, the fact that it has been stolen, in the identification code.

Each time a vehicle is in the vicinity of another vehicle, each of the two automatically detects the identification code of the other vehicle and compares it with said at least one specific identification code.

In the case in which comparison is positive, that is, in the case in which the presence of a stolen vehicle is detected, the other vehicle can send an alarm signal, optionally together with the current position thereof, to a control centre.

The communication method preferably comprises the step e) of activating a position indicator on the vehicle having an identification code corresponding to said at least one specific stored identification code.

In this way, the stolen vehicle is capable of transmitting a radio signal through time, consequently allowing the location thereof.

In fact, the radio signal can be received by a control centre, which by means of triangulation of said radio signal, is capable of establishing the position.

Moreover, the communication method preferably comprises the step f) of tracing the sequence of positions of a vehicle having an identification code corresponding to said at least one specific stored identification code, so as to identify the direction of said vehicle, if it is moving.

According to another aspect of the present invention, a communication system is provided for vehicles comprising a plurality of units, each of which is installed on a corresponding vehicle and is capable of communicating with other vehicles and with at least one control centre.

Each unit comprises radio communication means operating in a frequency band between 1 and 10 GHz.

Preferably, said radio communication means are low power and operate at a power of less than or equal to 10 mW.
For example, said radio communication means can be radio communication means of the type known by the term "Blue Tooth".

Each unit is provided with an identification code which can be detected automatically by a unit of another vehicle, for the location thereof.

Preferably, said radio communication means are capable of automatically detecting the identification code of another vehicle which is in the vicinity.

In this way it is possible to automatically check whether the identification code corresponds to a stored identification code, and signal this to a control centre.

It has therefore been shown that a communication method for moving units according to the present invention attains the objects indicated hereinbefore.

The communication method for moving units of the present invention thus conceived is susceptible to numerous modifications and variants, all falling within the same inventive concept.

Moreover, in practice the materials used, and the dimensions and components thereof, may be any according to technical requirements.

## Claims

1. Communication method for vehicles, each of which is provided with an identification code, **characterized in that** it comprises the following steps:
b) detecting from a vehicle an identification code of another vehicle and comparing it with at least one specific stored identification code;
c) if the comparison made in step b) is positive, transmitting a signal.

2. Communication method as claimed in claim 1, **characterized in that** said step c) consists of sending a signal to a control centre.

3. Communication method as claimed in claim 1, **characterized in that** said step c) consists of sending an activation signal for the vehicle corresponding to said at least one specific stored identification code.

4. Communication method as claimed in any one of claims 1 to 3, **characterized in that** it comprises the step: a) of receiving and storing at least one specific identification code.

5. Communication method as claimed in any one of claims 1 to 4, **characterized in that** said step c) comprises the step d) of signalling the position of said vehicle having an identification code corresponding to said at least one specific stored identification code.

6. Communication method as claimed in any one of claims 1 to 5, **characterized in that** it comprises the step:
e) of activating a position indicator on a vehicle having an identification code corresponding to said at least one specific stored identification code, to allow the location thereof.

7. Communication method as claimed in any one of claims 1 to 6, **characterized in that** it comprises the step: f) of tracing the sequence of positions of a vehicle having an identification code corresponding to said at least one specific stored identification code.

8. Communication system for vehicles comprising a plurality of units each of which is installed on a corresponding vehicle, each unit being capable of communicating with other units of the plurality of units and with at least one control centre, **characterized in that** each unit comprises radio communication means operating in a frequency band between 1 and 10 GHz, and **in that** each unit is provided with an identification code which is automatically detectable by a unit of another vehicle, for the location thereof.

9. System as claimed in claim 8, **characterized in that** said radio communication means are low power and operate at a power of less than or equal to 10 mW.

10. System as claimed in claim 9, **characterized in that** said radio communication means are capable of automatically detecting the identification code of another vehicle which is in the vicinity.
